(19) Europäisches Patentamt
European Patent Office
Office européen des brevets

(11) **EP 2 631 262 A1**

(12) **EUROPÄISCHE PATENTANMELDUNG**

(43) Veröffentlichungstag:
**28.08.2013 Patentblatt 2013/35**

(51) Int Cl.:
*C08J 5/18* (2006.01)          *C08L 67/02* (2006.01)
*B32B 27/20* (2006.01)        *B32B 27/36* (2006.01)

(21) Anmeldenummer: **12157099.8**

(22) Anmeldetag: **27.02.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Mitsubishi Polyester Film GmbH**
**65203 Wiesbaden (DE)**

(72) Erfinder:
• **Kliesch, Holger, Dr.**
**65462 Ginsheim-Gustavsburg (DE)**

• **Fischer, Ingo**
**65558 Heistenbach (DE)**
• **Kuhmann, Bodo**
**65594 Runkel (DE)**
• **Konrad, Matthias, Dr.**
**65830 Kriftel (DE)**

(74) Vertreter: **Schweitzer, Klaus et al**
**Plate Schweitzer Zounek**
**Patentanwälte**
**Rheingaustrasse 196**
**65203 Wiesbaden (DE)**

(54) **Biaxial gestreckte Polyesterfolie, die Ruß als Schwarzpigment enthält sowie Verfahren zu ihrer Herstellung**

(57)     Dier Erfindung betrifft ein schwarze, mindestens zweischichtige, biaxial gestreckte Polyesterfolie mit einer Dicke von 10 - 50 µm, die weniger als 1,0 - 2,42 Gew.-% Ruß enthält, eine Transparenz von kleiner 8 % aufweist, in keiner Schicht mehr als 10 Gew.-% Ruß enthält und mindestens eine Außenschicht A aufweist, die weniger als 0,5 Gew.-% Ruß enthält, wobei diese Außenschicht A einen Glanz bei 60°von mindestens 70 aufweist und diese Schicht mindestens 0,4 µm bis maximal 7 µm dicker ist und wobei der verwendete Ruß einen Gesamtgehalt an PAK von weniger als 0,5 ppm aufweist und der Gehalt an Benzo[a]pyrene kleiner ist als 5 ppb und der verwendete Ruß eine BET Oberfläche von > 40 und < 500 $m^2$/g und eine OAN von > 40 und kleiner 200 (gemessen mit DBP (ml/100g)) aufweist. Die Erfindung betrifft ferner ein Verfahren zur Herstellung der Folie sowie ihre Verwendung.

**EP 2 631 262 A1**

**Beschreibung**

Die Erfindung betrifft eine biaxial gestreckte Folie aus einem Polyester, deren Dicke bevorzugt im Bereich von 10 bis 50 µm liegt. Die Folie besteht überwiegend aus einem Polyester. Die Folie enthält weiterhin Ruß als Schwarzpigment, wobei sich der Ruß durch einen niedrigen Gehalt an polyzyklischen aromatischen Kohlenwasserstoffen auszeichnet. Die Folie ist mindestens zweischichtig, wobei mindestens eine äußere Schicht weniger als 0,5 Gew.-% Ruß enthält. Diese Folien zeichnen sich durch ihre gute Herstellbarkeit und einen sehr niedrigen Gehalt an extrahierbaren polyzyklischen aromatischen Kohlenwasserstoffen und einen hohen Glanz und eine Transparenz von weniger als 8 % aus. Die Erfindung betrifft ferner ein Verfahren zur Herstellung der Folie sowie ihre Verwendung.

Biaxial gestreckte Folien aus Polyestern im angegebenen Dickenbereich sind hinreichend bekannt. Schwarze Polyesterfolien sind ebenfalls bekannt s. z.B. EP-A-1 717 266. Rußhaltige Polyesterfolien sind ebenfalls bekannt s. z.B. WO-A-2002/070253 und WO-A-98/07068.

Industrieruße enthalten neben dem zur Schwarzfärbung notwendigen eigentlichen Ruß stets auch kleine oder größere Mengen an polyzyklischen aromatischen Kohlenwasserstoffen (PAK). Von polyzyklischen aromatischen Kohlenwasserstoffen (PAK) können verschiedene gesundheitsschädliche Wirkungen ausgehen. Zudem können sie bei Kontakt mit der Haut durch diese hindurch in den Körper eindringen. Daher ist es wünschenswert, wenn eine Folie, die die äußere Oberfläche von einem Bedarfsgegenstand bildet, möglichst geringe Mengen dieser Substanzen abgibt.

Besonders kritisch sind PAK, wenn die Folie in Kontakt mit Lebensmitteln kommt. Insbesondere für diese Anwendungen sollten daher nach Möglichkeit keinerlei aus der Folie heraus migrierende PAK nachweisbar sein.

Unter den PAK ist Benzo[a]pyren (1,2-Benzpyren) besonders kritisch zu bewerten, da für dieses die kanzerogene Wirkung nachgewiesen ist.

Die Folie soll zudem eine niedrige Transparenz haben und ein attraktives glänzendes Äußeres bei gutem Schwarzeindruck aufweisen.

Gelöst wird diese Aufgabe durch eine mindestens 2 schichtige biaxial gestreckte Folie, der Dicke 10 - 50 µm, die

1. weniger als 2,42 Gew.% Ruß enthält, bevorzugt weniger als 2,4 und idealerweise weniger als 2,3 Gew.-% Ruß enthält

2. mehr als 1 Gew.-% Ruß, bevorzugt mehr als 1,5 Gew.-% Ruß und idealerweise mehr als 2 Gew.-% Ruß enthält

3. eine Transparenz von kleiner 8 %, bevorzugt von kleiner 6 und idealerweise von kleiner 4,5 % aufweist.

4. in keiner Schicht mehr als 10 Gew.-% Ruß enthält und idealerweise in keiner Schicht mehr als 8 Gew.-% Ruß enthält

5. mindestens eine Außenschicht A aufweist, die weniger als 0,5 Gew.-% Ruß enthält, bevorzugt weniger als 0,1 Gew.-% und idealerweise gar keinen Ruß enthält.

6. mindestens die vorgenannte Außenschicht A einen Glanz bei 60° von größer 70, bevorzugt größer 90 und idealerweise > 100 aufweist.

7. die Außenschicht A ist zudem mindestens 0,4 µm, bevorzugt mindestens 0,8 µm und idealerweise mindestens 1 µm dick. Diese Außenschicht ist zudem nicht dicker als 7 µm und idealerweise nicht dicker als 5 µm.

8. wobei der verwendete Ruß einen Gesamtgehalt an PAK von weniger als 0,5 ppm aufweist und der Gehalt an Benzo[a]pyrene kleiner ist als 5 ppb

9. Der verwendete Ruß eine BET Oberfläche von > 40 und < 500 m²/g und eine Oil-Adsorption Number (OAN) > 40 und kleiner 200 gemessen mit DBP (ml/100g) aufweist.

Der Benzo(a)pyrene (BaP) Gehalt wird dabei nach folgender Methode ermittelt, welche die Bestimmung von insgesamt 22 PAHs beschreibt: *"Determination of PAH content of carbon black; Docket Nr. 95F-0163; Datum:* 8. *Juli 1994; Methode eingereicht durch Cabot Corporation, 75 State Street, Boston, MA; erhältlich bei dem Office of Premarket Approval Center for Food Safety and Applied Nutrition (HFS-200), Food and Drug Administration, 200"C" Street S. W., Washington, D. C. 20204"*.

Corax® N 550 benzo[a]byren = 2,8 ppm

OAN (Oil-Adsorption Number) nach ASTM D 2414 mit **DBP (ml/100g)** EP2336228

BET surface area can be measured according to ASTM D6556-04,

Read more: http://www.faqs.org/patents/app/20090057624#ixzz1 n2Xb7Rpm

Die Folie enthält als Hauptbestandteil einen Polyester. Geeignete Polyester sind beispielsweise Polyethylenterephthalat (PET), Polyethylennaphthalat (PEN), Polybutylenterephthalat (PBT), Polytrimethylenterephthalat (PTT), bibenzolmodifiziertes Polyethylenterephthalat (PETBB), bibenzolmodifiziertes Polybutylenterephthalat (PBTBB), bibenzolmodifiziertes Polyethylennaphthalat (PENBB) oder Mischungen daraus, wobei PET, PBT, PEN und PTT sowie deren Mischungen und Co-Polyester bevorzugt sind. Die Folie besteht bevorzugt zu 90 Gew.-% und besonders bevorzugt zu 95 Gew.-% aus einem Polyester, wobei anorganische Füllstoffe vernachlässigt werden.

Zur Herstellung der Polyester können neben den Hauptmonomeren wie Dimethylterephthalat (DMT), Ethylenglycol (EG), Propylenglycol (PG), 1,4-Butandiol, Terephthalsäure (TA), Benzoldicarbonsäure und/oder 2,6-Naphthalindicarbonsäure (NDA) auch Isophthalsäure (IPA), trans- und/oder cis-1,4-Cyclohexandimethanol (c-CHDM, t-CHDM oder c/t-CHDM), Neopentylglykol und andere geeignete Dicarbonsäurekomponenten (oder Dicarbonsäureester) und Diolkomponenten verwendet werden.

Tendenziell erhöhen alle Diolkomponenten, die von EG abweichen die Migration von PAK und sollten daher vermieden werden. Dies gilt insbesondere für die glänzende Außenschicht A. Diese Schicht sollte zudem aus dem gleichen Grund so wenig wie möglich von TA abweichende Dicarbonsäurekomponeneten enthalten. Bevorzugt sind für die Schicht A daher Polymere, bei denen die Dicarbonsäurekomponente zu 90 Gew.-% (bezogen auf die Gesamtmenge der Dicarbonsäurekomponente) und mehr, besonders bevorzugt zu 95 Gew.-% und mehr und insbesondere zu 98 Gew.-% und mehr, aus TA besteht. Bevorzugt sind weiterhin Polyester, bei denen die Diolkomponente zu 93 Gew.-% und mehr, besser zu 95 Gew.-% und mehr und insbesondere zu 97 Gew.-% (bezogen auf die Gesamtmenge der Diole) und mehr, aus EG besteht.

Da die Folie für Anwendungen im Lebensmittelkontakt eingesetzt werden soll, hat es sich als günstig erwiesen, wenn auf Antimonverbindungen als Katalysator bei der Herstellung der Rohstoffe verzichtet wird, da gesundheitsschädliche Wirkungen von Antimonverbindungen diskutiert werden und es zudem einen Grenzwert für die maximale Migration von Antimon aus der Folie gibt, dessen Einhaltung in der Endanwendung überprüft werden muss, was unerwünschte zusätzliche Kosten verursacht. Die eingesetzten Polyester werden unter Verwendung einer geeigneten Titan oder Aluminiumverbindung als Polykondensationkatalysator hergestellt. Bevorzugt werden Titanverbindungen eingesetzt. Antimonverbindungen sind als Polmerisationskatalysator aus oben erwähntem Grund unerwünscht und der Gehalt an Antimon liegt bevorzugt unterhalb von 15 ppm, bevorzugt unterhalb von 2 ppm und idealerweise enthält die Folie kein nachweisbares Antimon.

Die Folie gemäß der Erfindung kann weiterhin anorganische oder organische Partikel, die zur Einstellung der Oberflächentopographie oder Optik (Glanz, Trübung, etc.) benötigt werden, enthalten. Solche Partikel sind z. B. Kalziumcarbonat, Apatit, Siliziumdioxid, Titandioxid, Aluminiumoxid, vernetztes Polystyrol, vernetztes Polymethylmethacrylat (PMMA), Zeolithe und andere Silikate wie Aluminiumsilikate. Diese Partikel werden insbesondere den Außenschichten zu Verbesserung der Wickelbarkeit der Folie zugegeben.

Diese Verbindungen werden im Allgemeinen in Mengen von 0,01 bis 5 Gew.-%, vorzugsweise 0,01 bis 0,5 Gew.-%, und idealerweise 0,01 bis 0,3 Gew.-% (bezogen auf das Gewicht der Folie) eingesetzt. Besonders bevorzugt sind dabei Kalziumcarbonat und Siliziumdioxid. Je höher der Gehalt an Partikel, desto höher wird im Allgemeinen der Graueindruck der Folie und desto geringer der Schwarzeindruck. In der Deckschicht A ist der Anteil an Partikeln in jedem Fall geringer als 2 Gew.-% und bevorzugt geringer als 1 Gew.-% und idealerweise geringer als 0,5 Gew.-%, da die Folie sonst deutlich grau und zu wenig glänzend wird.

Die eingesetzten Teilchengrößen ($d_{50}$) liegen zum Erreichen einer guten Laufsicherheit in der Produktion im Allgemeinen zwischen 0,1 und 8 $\mu$m und bevorzugt zwischen 0,3 und 5,5 $\mu$m und besonders bevorzugt zwischen 0,5 und 2,5 $\mu$m. Faserförmige anorganische Zuschlagstoffe wie Glasfasern sind ungeeignet, da sie die Produktion der Polyesterfolie durch viele Abrisse unwirtschaftlich machen. Werden Partikel mit einem $d_{50}$ oberhalb von 8 $\mu$m eingesetzt, so wird der Graueindruck deutlich verstärkt und der Glanz reduziert.

In der erfindungsgemäßen Ausführungsform enthält die Folie in mindestens einer Schicht mindestens einen Ruß als Schwarzpigment.

Bezogen auf das Gesamtgewicht der Folie liegt der Russgehalt bei weniger als 2,42 Gew.-%, bevorzugt weniger als 2,4 und idealerweise weniger als 2,3 Gew.-% Ruß. Mit steigendem Russgehalt steigt der Gesamtgehalt an PAK und oberhalb von 2,42 Gew.-% Ruß ist die Folie für den Einsatz in Lebensmittelkontaktanwendungen ungeeignet, die die gesetzlichen Grenzen im Rahmen normaler Streuungen der Dosiergenauigkeit nicht mehr sicher eingehalten werden können. Unterhalb von 1 Gew.-% Ruß, kann die erfindungsgemäße niedrige Transparenz nicht mehr sicher erreicht werden und der Schwarzeindruck wird zu gering. Bevorzugt enthält die Folie daher mehr als 1,5 Gew.-% Ruß und idealerweise mehr als 2 Gew.-% Ruß.

Da Carbon Black/Ruß die elektrische Leitfähigkeit der Folie, insbesondere aber der Schmelze im Herstellprozess erhöht, was zu Schwierigkeiten bei der elektrostatischen Anlegung der extrudierten ungestreckten Folie auf die Abzugswalze führen kann, enthält keine Schicht mehr als 10 Gew.-% Ruß und idealerweise keine Schicht mehr als 8 Gew.-% Ruß. Ein hoher Rußgehalt einer Schicht erhöht zudem die Gefahr der Bildung von Russagglomeraten, die als schwarze Einschlüsse in der Folie erkennbar sind und als optische Fehler unerwünscht sind. Diese lassen sich am besten vermeiden, wenn keine Schicht mehr als 5 Gew.-% Ruß, bevorzugt keine Schicht mehr als 4 Gew.-% Ruß und idealerweise keine Schicht mehr als 3,2 Gew.-% Ruß enthält.

Bevorzugt wird Ruß verwendet, der nach dem "Furnace"-Prozess hergestellt wurde.

Der Gehalt der PAK = Polycyclischen Aromatischen Kohlenwasserstoffe (insbesondere Naphtalen, Acenaphthylen, Fluoren, Phenanthren, Anthracen, Fluoranthen, Pyren, Benzo(ghi)fluoranthen, Benz(a)anthracen, Cyclopenta (cd)pyren, Chrysen, Benzo(b/j)fluoranthen, Benzo(k/j)fluoranthen, Benzo(e)pyren, Benzo(a)pyren, Perylen, Dibenz (ac/ah)anthracen, Benzo(ghi)perylen, Anthantren, Coronen) im eingesetzten Ruß liegt bei weniger als 0,5 ppm Gesamt-PAK-Gehalt, bevorzugt bei weniger als 0,4 ppm und idealerweise bei kleiner 0,3 ppm. Der Gehalt an Benzo[a]pyrene ist kleiner ist als 5 ppb und bevorzugt kleiner als 4 ppb. Solche Ruße sind kommerziell erhältlich; Beispiele für geeignete Ruße sind BLACK PEARLS 4750 von Cabot Inc. USA oder PRINTEX® F 85 von Orion Engineered Carbons GmbH Deutschland.

Werden Ruße eingesetzt, die einen Gesamt-PAK-Gehalt oder einen Gehalt an Benzo[a]pyrene oberhalb der genannten Grenzen haben, so ist die Folie für den Einsatz in Lebensmittelkontaktanwendungen ungeeignet.

Die erfindungsgemäße Folie erfüllt zudem die höchste Anforderung gemäß Prüfnorm ZEK (Zentraler Erfahrungsaustauschkreise) 01.2-08 *"Prüfung und Bewertung von Polycyclischen Aromatischen Kohlenwasserstoffen (PAK)"*, d.h. PAK sind nach dieser Extraktionsmethode nicht nachweisbar. Dieses wird einerseits dadurch erreicht, dass die eingesetzten Ruße die oben genannten Grenzen für PAK nicht überschreiten, die Gesamtkonzentration an Ruß sich innerhalb der erfindungsgemäßen Grenzen bewegt und dies wird insbesondere dadurch erreicht, dass die Oberfläche die nach ZEK 01.2-08 geprüft wird die Außenschicht A ist (zur Beschreibung von Außenschicht A siehe unten). Wenn nicht beide Außenschichten die Anforderungen an Außenschicht A erfüllen, dann muss die andere Außenschicht geeignet abgedeckt werden und wird so nicht gemäß ZEK 01.2-08 geprüft.

Da neben den PAK auch gesundheitsschädliche Auswirkungen von Schwermetallen aus Industrierußen diskutiert wird, weisen die eingesetzten Ruße in einer bevorzugten Ausführungsform einen Gesamtgehalt der Schwermetalle Arsen (As), Cadmium (Cd), Cobalt (Co), Chrom (Cr), Kupfer (Cu), Nickel (Ni) Quecksilber (Hg), Blei (Pb) von kleiner 20 ppm, bevorzugt von kleiner 10 ppm und idealerweise von kleiner 6 ppm auf (gemessen per Elementanalyse mittels Inductively Coupled Plasma - Atomic Emission Spectrometry).

Eine gute Einarbeitung der Ruße mit geringen Mengen an Agglomeraten, die als schwarze Stippen optische Fehler darstellen, und ein guter Schwarzeindruck (wenig Gelb- bzw. Braunstichigkeit) kann dann gewährleistet werden, wenn der verwendete Ruß eine BET Oberfläche (bestimmt nach ASTM D6556-04) von > 40 und < 500 m$^2$/g, bevorzugt eine BET Oberfläche von 100 bis 250 m$^2$/g aufweist und eine OAN (Oil-Adsorption Number, gemessen nach ASTM D 2414 mit DBP) von > 40 und kleiner 200 ml/1 00g aufweist.

Die Außenschicht A enthält weniger als 0,5 Gew.-% Ruß, bevorzugt weniger als 0,1 Gew.-% und idealerweise enthält die Außenschicht A gar keinen Ruß. Je höher der Gehalt an Ruß in der Au ßenschicht A, desto geringer ist der Glanz der Folie und desto höher auch der unerwünschte Graueindruck der Folie. Zudem steigt die Migration von Rest-PAK aus der Folie mit steigendem Rußgehalt an.

Die Außenschicht A ist zudem mindestens 0,4 $\mu$m, bevorzugt mindestens 0,8 $\mu$m und idealerweise mindestens 1 $\mu$m dick. Je dünner die Schicht desto geringer wird der Glanz der Schicht und desto größer auch der unerwünschte Graustich der Folie. Je dicker die Schicht, desto geringer ist die Migration von PAK durch die Schicht. Diese Außenschicht A ist zudem aber nicht dicker als 7 $\mu$m und idealerweise nicht dicker als 5 $\mu$m, da sonst bei zu großer Schichtdicke erneut ein schlechterer Schwarzeindruck entsteht und der Gehalt an Ruß in den verbleibenden Schichten dann höher sein muss, um die erfindungsgemäße Transparenz und Schwarzeindruck zu erreichen. Die Folie ist mindestens zweischichtig, wobei mindestens eine Außenschicht A die oben beschriebenen Anforderungen an Rußgehalt und Dicke und Partikelgehalt erfüllt.

Bevorzugt ist die Folie mindestens dreischichtig, wobei in einer bevorzugten Ausführungsform die zweite Außenschicht dieselben Anforderungen wie Außenschicht A erfüllt.

Die Transparenz der Folie ist kleiner als 8 %, bevorzugt kleiner 6 % und idealerweise kleiner 4,5 %. Eine höhere Transparenz führt zu einem geringeren Schwarzeindruck (Folie wirkt dann gelblich-bäunlich). Die erfindungsgemäße Transparenz wird erreicht, wenn Ruße der beschriebenen Eigenschaften in den erfindungsgemäßen Konzentrationen eingesetzt werden.

Die Folie weist weiterhin mindestens auf der Außenschicht A einen Glanz bei 60° von größer 70, bevorzugt größer 90 und idealerweise > 100 auf. Je höher der Glanz, desto besser ist der Schwarzeindruck und desto geringer der Graustich der Folie. Der Glanz wird erreicht durch das Einhalten der erfindungsgemäßen maximalen Russkonzentration in dieser Schicht, durch die erfindungsgemäßen Schichtdicken und Polymere, sowie durch Wahl und Menge der anorganischen oder organischen Partikel.

Weiterhin hat es sich als günstig erwiesen, wenn der Folie ein Stabilisator in Form eines Radikalfängers hinzu gegeben wird, da dadurch ebenfalls die thermische Langzeitstabilität verbessert werden kann. Zweckmäßigerweise enthält die erfindungsgemäße Folie solche Stabilisatoren als Radikalfänger bzw. Thermostabilisatoren in Mengen von 50 bis 15.000 ppm, bevorzugt 100 bis 5.000 ppm, besonders bevorzugt 300 bis 1000 ppm, bezogen auf das Gewicht der Folie. Geeignete Stabilisatoren sind insbesondere Irganox 1010 und Irganox 1330 der Firma BASF oder Mischungen daraus.

Die Folie gemäß der Erfindung wird im Allgemeinen nach an sich bekannten Extrusionsverfahren hergestellt.

Die Foliendicke liegt zwischen 10 - 50 $\mu$m und bevorzugt zwischen 11 und 30 $\mu$m und besonders bevorzugt zwischen 12 und 25 $\mu$m. Unterhalb von 10 $\mu$m wird kein ausreichender Schwarzeindruck erreicht, oberhalb von 50 $\mu$m wird der Preis pro m$^2$ für die meisten Anwendungen im Lebensmittelbereich zu hoch.

Der/die Ruß(e) und gegebenenfalls andere Additive werden bevorzugt über ein Masterbatch in die entsprechende Schicht eingebracht. Zur Erstellung des Masterbatches werden bevorzugt Ruß/Additiv und Polyester in einem Mehrschneckenextruder gemischt und durch eine Lochdüse extrudiert und granuliert. Das Pigment oder Additiv kann aber auch direkt bei der Polyesterherstellung zugegeben werden, um ein Polykondensationsmasterbatch herzustellen. Üblicherweise werden dabei die Additive im Falle des DMT-Verfahrens (DMT = Dimethylterephthalat als Ausgangsmonomer) nach der Umesterung bzw. direkt vor der Polykondensation (z. B. über die Transportleitung zwischen Umesterungs- und Polykondensationskessel) als Dispersion in Ethylenglykol zugegeben. Die Zugabe kann aber auch schon vor der Umesterung erfolgen. Im Falle des TPA-Verfahrens (TPA = Terephthalic Acid = Terephthalsäure als Ausgangsmonomer) erfolgt die Zugabe bevorzugt zu Beginn der Polykondensation. Eine spätere Zugabe ist jedoch auch möglich. Es hat sich bei diesem Verfahren als günstig erwiesen, wenn die Dispersion in Ethylenglykol vor der Zugabe über einen PROGAF PGF 57®-Filter (Hayward/Indiana, USA) filtriert wird.

Von den technischen Eigenschaften, z.B. der Agglomeratbildung, her bieten die Polykondensationsmasterbatche einen Vorteil. Bei kurzfristigen Anpassungen, kleinen oder variablen Batchgrößen hat der Extrusionsmasterbatch Vorteile in der Flexibilität gegenüber Polykondensationsmasterbatchen.

Ebenfalls möglich ist die Dosierung der Pigmente oder Additive direkt bei der Folienherstellung in den Extruder. Dies hat jedoch häufig den Nachteil, dass die Homogenisierung gegenüber den anderen beiden Methoden schlechter ist und Agglomerate auftreten, welche die Folieneigenschaften negativ beeinflussen können.

Bei dem Verfahren zur Herstellung der erfindungsgemäßen Folien wird zweckmäßigerweise so vorgegangen, dass die entsprechenden Schmelzen durch eine Flachdüse extrudiert werden, die so erhaltene Folie zur Verfestigung auf einer oder mehreren Walze/n (Kühlwalze) als weitgehend amorphe Vorfolie abgezogen und abgeschreckt wird, die Folie anschließend erneut erhitzt und biaxial gestreckt (orientiert) und die biaxial gestreckte Folie thermofixiert wird.

Es hat sich als günstig erwiesen, wenn für die Extrusion der Russ-haltigen Schichten Zweischneckenextruder verwendet werden, da dadurch im Rohstoff vorhandene Ruß-Agglomerate effektiver zerkleinert werden, als in Einschneckenextrudern. Die Schmelzen der Ruß-haltigen Schichten sollten zur Vermeidung von Agglomeraten in der Folie über einen Filter mit einer Außschlußgröße von maximal 30 $\mu$m, bevorzugt maximal 15 mm gefiltert werden.

Werden Einschneckenextruder benutzt, so sollten die Rohstoffe vor der Extrusion getrocknet werden. Dies erfolgt zweckmäßigerweise bei Temperaturen zwischen 110 und 155 °C, für einen Zeitraum von 20 Minuten bis 1,5 Stunden. Längere Zeiten und höhere Temperaturen führen zu einem thermischen Abbau der eingesetzten Polymere.

Die biaxiale Verstreckung wird im Allgemeinen sequentiell durchgeführt. Dabei wird vorzugsweise erst in Längsrichtung (d. h. in Maschinenrichtung, = MD-Richtung) und anschließend in Querrichtung (d. h. senkrecht zur Maschinenrichtung, = TD-Richtung) verstreckt. Dies führt zu einer Orientierung der Molekülketten. Das Verstrecken in Längsrichtung lässt sich mit Hilfe zweier entsprechend dem angestrebten Streckverhältnis verschieden schnell laufender Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im Allgemeinen wird die Längs- und auch die Querstreckung bei $T_g$ + 5 °C bis $T_g$ + 60 °C ($T_g$ = Glastemperatur der Folie) durchgeführt. Es hat sich dabei als günstig für die Produktivität erwiesen, wenn Temperaturen zwischen $T_g$ + 15 °C bis $T_g$ + 35 °C eingestellt werden. Je näher die Folien an der Glastemperatur gestreckt werden, desto geringer ist die im Prozess zu beobachtende Randversprödung, die zu Abrissen führen kann. Das Längsstreckverhältnis liegt allgemein im Bereich von 2,0 : 1 bis 6,0 : 1, vorzugsweise 2,7 : 1 bis 4,5 : 1. Das Querstreckverhältnis liegt allgemein im Bereich von 2,0 : 1 bis 5,0 : 1, vorzugsweise 3,1 : 1 bis 4,6 : 1 und das einer gegebenenfalls durchgeführten zweiten Längs- und Querstreckung liegt bei 1,1 : 1 bis 5,0 : 1.

Eine ausreichende Festigkeit der Folie in Längs- und Querrichtung für nachfolgende Verarbeitungsschritte wie Laminierung, Metallisierung etc. ist dann gegeben, wenn das E-Modul in beiden Folienrichtungen größer ist als 3000 N/mm$^2$ bzw. bevorzugt größer als 3500 N/mm$^2$ ist. Diese Festigkeiten werden erreicht, wenn das Flächenstreckverhältnis (Längs mal Quer) größer ist als 9 und bevorzugt größer ist als 9,5.

Je höher Streckverhältnis und je niedriger die Temperatur der Streckung desto höher ist der unerwünschte Graustich der Folie. Daher ist das Flächenstreckverhältnis kleiner als 30, bevorzugt kleiner als 20 und idealerweise kleiner als 16,5.

Die Längsstreckung kann gegebenenfalls gleichzeitig mit der Querstreckung (Simultanstreckung) durchgeführt werden.

Bei der nachfolgenden Thermofixierung wird die Folie etwa 0,1 bis 10 s lang bei einer Temperatur von 170 bis 255 °C, vorzugsweise 210 bis 250 °C, und idealerweise bei einer Temperatur von 220 - 240 °C gehalten. Die tatsächlich erlebten Temperaturen liegen zumeist 1 - 3 °C unterhalb der Im Fixierrahmen eingestellten Temperaturen. Die eingestellte Temperatur kann aus der Folie ermittelt werden, in dem wie in US-A-6,737,226 Sp. 6 beschrieben, die tatsächlich erlebte Fixiertemperatur bestimmt wird und zu dieser 1- 3 °C addiert werden. Das Resultat gibt eine Bandbreite für die im Prozess eingestellte Fixiertemperatur an.

Anschließend an, beziehungsweise beginnend in der Thermofixierung wird die Folie um 0,5 bis 15 %, vorzugsweise um 2 bis 8 %, in Quer- und gegebenenfalls auch in Längsrichtung relaxiert und die Folie dann in üblicher Weise abgekühlt und aufgewickelt.

In einer bevorzugten Ausführungsform liegt der Schrumpf bei 150 °C (15 min) in beiden Folienrichtungen unterhalb von 3 %, besonders bevorzugt unterhalb von 2,5 % und idealerweise in beiden Folienrichtungen unterhalb von 1,9 %. Der Schrumpf in Querrichtung liegt bevorzugt bei < 1,0 %, besonders bevorzugt bei < 0,75 % und idealerweise bei < 0,1 %. Der Schrumpf ist bevorzugt in keiner Folienrichtung < -1,0 % (entspricht 1 % Dehnung), besonders bevorzugt in keiner Folienrichtung < -0,75 % und idealerweise in keiner Folienrichtung < -0,5 %. Dies kann erreicht werden, indem die maximale Temperatur in der Fixierung größer 210 °C und bevorzugt größer 220 °C und besonders bevorzugt größer 228 °C eingestellt wird. Bevorzugt liegt die Relaxation in Querrichtung oberhalb von 3 % und bevorzugt werden mindestens 30 % dieser Relaxation bei Temperaturen unterhalb von 200 °C durchgeführt. Zu hoher Schrumpf und insbesondere eine zu hohe Dehnung können zu Faltenbildung in nachfolgenden Laminierprozessen führen und sind insbesondere dann zu vermeiden, wenn die Folie zur Stahllaminierung eingesetzt werden soll.

Die erfindungsgemäße Folie eignet sich hervorragend für die Verwendung in Lebensmittelkontaktanwendungen z.B. Kaschiert auf Karton in Verpackungen, aber auch laminiert auf Stahl, der dann z.B. in Küchen zum Einsatz kommen kann.

Die Messung der einzelnen Eigenschaften erfolgt gemäß den angeführten Normen bzw. Verfahren.

## Messmethoden

### SV-Wert (standard viscosity)

Die Standardviskosität SV (DCE) wird, angelehnt an DIN 53 726, bei 25 °C in einer Konzentration von 1 % in Dichloressigsäure gemessen. Aus der relativen Viskosität ($\eta_{rel}$) wird der dimensionslose SV-Wert wie folgt ermittelt:

$$SV\ (DCE) = (\eta_{rel}\text{-}1)\ x\ 1000$$

### Schrumpf

Der thermische Schrumpf wird an quadratischen Folienmustern mit einer Kantenlänge von 10 cm bestimmt. Die Proben werden so ausgeschnitten, dass eine Kante parallel zur Maschinenrichtung und eine Kante senkrecht zur Maschinenrichtung verläuft. Die Proben werden genau ausgemessen (die Kantenlänge $L_0$ wird für jede Maschinenrichtung TD und MD bestimmt, $L_{0\ TD}$ und $L_{0\ MD}$) und werden 15 min bei der angegeben Schrumpfungstemperatur (hier 150 °C) in einem Umlufttrockenschrank getempert. Die Proben werden entnommen und bei Raumtemperatur genau ausgemessen (Kantenlänge $L_{TD}$ und $L_{MD}$). Der Schrumpf ergibt sich aus der Gleichung

$$\text{Schrumpf [\%] MD} = 100 \bullet (L_{0\ MD}\text{-} L_{MD}) / L_{0\ MD}$$

$$\text{Schrumpf [\%] TD} = 100 \bullet (L_{0\ TD}\text{-} L_{TD}) / L_{0\ TD}$$

### Messung des mittleren Partikeldurchmessers $d_{50}$ an Partikeln vor der Einbringung in den Rohstoff

Die Bestimmung des mittleren Partikeldurchmessers $d_{50}$ wurde mittels Laser auf einem Master Sizer (Malvern Instruments, UK) nach der Standardmethode durchgeführt (andere Messgeräte sind z.B. Horiba LA 500 (Horiba Ltd., Japan) oder Helos (Sympatec GmbH, Deutschland), welche das gleiche Messprinzip verwenden). Die Proben wurden dazu in eine Küvette mit Wasser gegeben und diese dann in das Messgerät gestellt. Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50 % Ordinatenwertes mit der Summenkurve liefert auf der Abszissenachse den gewünschten $d_{50}$-Wert.

### Messung der mechanischen Eigenschaften der Folie

Die Bestimmung der mechanischen Eigenschaften erfolgt nach DIN EN ISO 527-1 bis 3.

### Glanz

Der Glanz wird nach DIN 67530 bestimmt. Der Einstrahlwinkel mit 60 ° eingestellt.

**Transparenz**

Die Transparenz wird nach ASTM-D 1033-77 gemessen mittels haze-gard plus der Firma BYK-Gardner GmbH Deutschland.

**Ausdehnung**

Die thermische Ausdehnung wird an quadratischen Folienmustern mit einer Kantenlänge von 10 cm bestimmt. Die Proben werden genau ausgemessen (Kantenlänge $L_0$), 15 Minuten bei 100 °C in einem Umlufttrockenschrank getempert, und anschließend bei Raumtemperatur genau ausgemessen (Kantenlänge L). Die Ausdehnung ergibt sich aus der Gleichung

$$\text{Ausdehnung } [\%] = 100 * (L - L_0) / L_0$$

**Beispiele**

**Prozess:**

Es werden 3 Polymer-Mischungen in 3 Zweischnecken-Extrudern bei 290° C aufgeschmolzen:
Die Polymermischungen werden in einem Adapter zusammenführt und durch eine Breitschlitzdüse auf eine auf 40° C temperierte Kühlwalze elektrostatisch angelegt. Anschließend wird sie bei folgenden Bedingungen längs- und dann quergestreckt:

| Längsstreckung | Aufheiztemperatur | 75-115 | °C |
|---|---|---|---|
| | Strecktemperatur | 115 | °C |
| | Längsstreckverhältnis | 3,6 | |
| Querstreckung | Aufheiztemperatur | 100 | °C |
| | Strecktemperatur | 110 | °C |
| | Querstreckverhältnis | 4,0 | |
| Fixierung | Temperatur | 237 - 150 | °C |
| | Dauer | 3 | s |
| | Relaxation in TD bei 200 - 150 °C | 4,5 | % |

Die so erhaltene Folie hat eine Gesamtdicke von 12 $\mu$m und die Deckschichten A und C sind beide 1 $\mu$m dick.

**Rohstoffe:**

Alle Rohstoffe sind antimonfrei, d.h. es wurden keine Antimonverbindungen sondern Titanverbindungen als Umesterungskatalysator verwendet. Die Rohstoffe bestehen aus Polyethylenterephthalat mit einem Diethylenglykolgehalt von 1,0 %. Andere Co-Monomere sind nicht nachweisbar außer wenn unten anders angegeben.
R1 = Polyethylentererphthalatrohstoff mit einem SV Wert von 820.
R2 = Polyethylentererphthalatrohstoff mit einem SV Wert von 810 und 1 Gew. % Siliziumdioxid der Firma Grace (Deutschland) Typ Sylobloc 44H mit einem d50 = 2,55 $\mu$m. Das Sylobloc wurde dem Polyester während der Polykondensation zugegegeben.
R3 = Polyethylentererphthalatrohstoff mit einem SV Wert von 820 und 20 Gew.% des Rußes PRINTEX® F 85 von Orion Engineered Carbons GmbH Deutschland. Hergestellt durch Einarbeiten der Rußes in das PET in einem Zweischneckenextruder. Eigenschaften des Rußes: BET = 200 m2/g, OAN 46 ml/100g gemessen mit DBP, Gesamtgehalt an PAK < 0,3 ppm, Gehalt an Benzo[a]pyrene < 3 ppb, Gehalt an relevanten Schwermetallen (Definition siehe oben) < 6 ppm.
R4 = Polyethylentererphthalatrohstoff mit einem Isophthalsäuregehalt von 22 % mit einem SV Wert von 818 und 20 Gew.% des Rußes Corax® N 550 von Orion Engineered Carbons GmbH Deutschland. Hergestellt durch Einarbeiten der Rußes in das PET in einem Zweischneckenextruder. Eigenschaften des Rußes: OAN 119 ml/100g gemessen mit DBP, Gesamtgehalt an PAK > 5 ppm, Gehalt an Benzo[a]pyrene 2,7 ppm.

R5 = Polyethylentererphthalatrohstoff mit einem Isophthalsäuregehalt von 22 % mit einem SV Wert von 818.

| Eigenschaft | | Beispiel | Vergleichsbeispie |
|---|---|---|---|
| | | 1 | 1 |
| Rohstoffe Basisschicht in Gew. % | R1 | 89 | 85 |
| | R2 | | |
| | R3 | 11 | |
| | R4 | | 15 |
| Rohstoffe Außenschichten A/A' in Gew. % | R1 | 95 | 30 |
| | R2 | 5 | 5 |
| | R3 | | |
| | R4 | | 15 |
| | R5 | | 50 |
| Gesamtdicke | in µm | 12 | 12 |
| Folie geeignet für Lebensmittelkontaktanwendungen | | Ja | Nein |
| PAK nachweisbar nach ZEK 01.2-08 | | Nein | Ja |
| Schrumpf längs | in % | 1,5 | 1,5 |
| Schrumpf quer | in % | 0,0 | 0,1 |
| E-Modul längs | in N/mm2 | 4100 | 4100 |
| E-Modul quer | in N/mm2 | 4500 | 4700 |
| Transparenz | in % | | 1,9 |
| Glanz | | | 61 |

**Patentansprüche**

1. Schwarze mindestens zweischichtige biaxial gestreckte Polyesterfolie mit einer Dicke von 10 - 50 µm, die weniger als 1,0 - 2,42 Gew.-% Ruß enthält, eine Transparenz von kleiner 8 % aufweist, in keiner Schicht mehr als 10 Gew.-% Ruß enthält und mindestens eine Außenschicht A aufweist, die weniger als 0,5 Gew.-% Ruß enthält, wobei diese Außenschicht A einen Glanz bei 60 °von mindestens 70 aufweist und diese Schicht mindestens 0,4 µm bis maximal 7 µm dicker ist und wobei der verwendete Ruß einen Gesamtgehalt an PAK von weniger als 0,5 ppm aufweist und der Gehalt an Benzo[a]pyrene kleiner ist als 5 ppb und der verwendete Ruß eine BET Oberfläche von > 40 und < 500 m$^2$/g und eine OAN von > 40 und kleiner 200 (gemessen mit DBP (ml/100g)) aufweist.

2. Verwendung einer Folie nach Anspruch 1 als Folie in Lebensmittelkontaktanwendungen.

Europäisches
Patentamt

European
Patent Office

Office européen
des brevets

**EUROPÄISCHER RECHERCHENBERICHT**

Nummer der Anmeldung

EP 12 15 7099

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2008/058114 A2 (CABOT CORP [US]; YUROVSKAYA IRINA S [US]; SIFLEET WILLIAM L [US]; REZN) 15. Mai 2008 (2008-05-15) <br> * Absätze [0060], [0063], [0082] * <br> ----- | 1,2 | INV. <br> C08J5/18 <br> C08L67/02 <br> B32B27/20 <br> B32B27/36 |

RECHERCHIERTE
SACHGEBIETE (IPC)

C08J
C08L
B32B

Der vorliegende Recherchenbericht wurde für alle Patentansprüche erstellt

| Recherchenort | Abschlußdatum der Recherche | Prüfer |
|---|---|---|
| München | 31. Juli 2012 | Andriollo, Giovanni |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
...........................................................................................
& : Mitglied der gleichen Patentfamilie, übereinstimmendes
Dokument

EPO FORM 1503 03.82 (P04C03)

# EP 2 631 262 A1

**ANHANG ZUM EUROPÄISCHEN RECHERCHENBERICHT**
**ÜBER DIE EUROPÄISCHE PATENTANMELDUNG NR.**

EP 12 15 7099

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-07-2012

| Im Recherchenbericht angeführtes Patentdokument | Datum der Veröffentlichung | Mitglied(er) der Patentfamilie | Datum der Veröffentlichung |
|---|---|---|---|
| WO 2008058114 A2 | 15-05-2008 | AR 063605 A1 | 04-02-2009 |
| | | CA 2668893 A1 | 15-05-2008 |
| | | CN 101573417 A | 04-11-2009 |
| | | CO 6190558 A2 | 19-08-2010 |
| | | EP 2087046 A2 | 12-08-2009 |
| | | JP 2010509466 A | 25-03-2010 |
| | | KR 20090083446 A | 03-08-2009 |
| | | RU 2009121515 A | 20-12-2010 |
| | | TW 200844188 A | 16-11-2008 |
| | | US 2008159947 A1 | 03-07-2008 |
| | | US 2011313094 A1 | 22-12-2011 |
| | | WO 2008058114 A2 | 15-05-2008 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- EP 1717266 A
- WO 2002070253 A
- WO 9807068 A
- EP 2336228 A
- US 6737226 A